# EUROPÄISCHE PATENTSCHRIFT

(11) **EP 2 162 648 B1**
(45) Veröffentlichungstag und Bekanntmachung des Hinweises auf die Patenterteilung: **01.03.2017**
(21) Anmeldenummer: 08758194.8
(22) Anmeldetag: 13.06.2008
(51) Int. Cl.: F16J 9/20

(54) **KOLBENRING FÜR DEN KOLBEN EINES VERBRENNUNGSMOTORS**
PISTON RING FOR THE PISTON OF AN INTERNAL COMBUSTION ENGINE
SEGMENT DE PISTON POUR LE PISTON D'UN MOTEUR A COMBUSTION INTERNE

(30) Priorität: 13.06.2007 DE 102007027223
(43) Veröffentlichungstag der Anmeldung: 17.03.2010
(73) Patentinhaber: MAHLE International GmbH, 70376 Stuttgart (DE)
(72) Erfinder: GALLAS, Tino, 70191 Stuttgart (DE); KÖBLE, Klaus, 70839 Gerlingen (DE); MARTINS, Leandro, Mileo, 37500-096 Itajuba, Mogi Guacu (BR)
(74) Vertreter: BRP Renaud & Partner mbB Rechtsanwälte Patentanwälte Steuerberater
(86) Internationale Anmeldenummer: PCT/DE2008/001013
(87) Internationale Veröffentlichungsnummer: WO 2008/151619

(56) Entgegenhaltungen:
- WO-A-2004/088179
- DE-C1- 3 420 404
- DE-U- 1 675 485
- JP-A- 2 229 964
- US-A- 2 591 920

## Beschreibung

Die Erfindung betrifft einen Kolbenring für den Kolben eines Verbrennungsmotors mit einer umlaufenden, innen liegenden Fase, deren Größe beidseitig des Ringstoßes bis zu der dem Ringstoß gegenüberliegenden Seite des Kolbenrings symmetrisch zu einer durch den Ringstoß laufenden, radial liegenden Achse abnimmt.

Aus der US-Patentschrift US 2 591 920 ist ein Kolbenring für den Kolben eines Verbrennungsmotors mit einer umlaufenden, innen liegenden Fase bekannt, deren Größe ausgehend vom Ringstoß bis zu der dem Ringstoß gegenüberliegenden Seite des Kolbenrings stetig abnimmt, und die auf der oberen Seite des Kolbenrings angeordnet ist. Eine oben und innen liegende Fase hat den Effekt, das der Kolbenring unter mechanischer Spannung eine positive Vertwistung erfährt, d.h., dass hierbei die Oberseite des Kolbenrings eine nach oben sich öffnende, konische Form erhält. Hierdurch gelangt die äußere Kante der oberen Ringnutflanke in Anlage an die Oberseite des Kolbenrings, sodass sich in diesem Bereich eine verbesserte Abdichtwirkung des Kolbenrings gegenüber den unter Druck stehenden Verbrennungsgasen des Brennraumes ergibt.

Bei der positiven Vertwistung des Kolbenrings gelangt die untere, innere Kante des Kolbenrings in Anlage an die untere Ringnutflanke, wodurch sich hier ein umlaufender, nach radial innen schmaler werdender Spalt ausbildet, der zu einer schlechten Abdichtwirkung des Kolbenrings gegenüber dem von dessen äußerer, unterer Kante von der Zylinderinnenwand abgestreiften Öl führt.

Aus der WO 2004/088179 A1 ist ein Kolbenring mit einem einen Stoß bildenden Schlitz bekannt, der eine innenliegende inkonstante Querschnittsstörung (Fase) aufweist, die, in Umfangsrichtung gesehen, im Bereich des Stoßes größer ausgebildet ist als in einem dem Stoß diametral gegenüberliegenden Bereich.

Auch aus der JP H02-229964 A ist ein Kolbenring bekannt, der eine innenliegende Fase aufweist, die von einem Stoß ausgehend zu einem dem Stoß gegenüberliegenden Bereich abnimmt.

Aus der DE 16 75 485 U ist ein Kolbenring bekannt, der eine Entlastungsfase aufweist, die exzentrisch zu der Gleitfläche des Kolbenringes angeordnet ist.

Aus der DE 34 20 404 C1 ist ein geschlitzter Kolbenring bekannt, der aufgrund einer speziellen Formgebung durch die Bewegung des Kolbens an ihn unterschiedlich wirksame Gas- und Reibungskräfte in Drehung versetzbar.

Aufgabe der Erfindung ist es, diesen Nachteil des aus dem Stand der Technik bekannten Kolbenrings zu vermeiden und einen Kolbenring zu schaffen, der eine gute Abdichtwirkung gegenüber dem von der Zylinderinnenwand abgestreiften Öl aufweist, sodass sich der Kolbenring als Ölabstreifring oder als zweiter Kolbenring zwischen dem Verdichtungs- und dem Ölabstreifring eignet.

Gelöst wird diese Aufgabe dadurch, dass die Fase auf der dem Kolbenboden abgewandten, unteren Seite des Kolbenrings angeordnet ist.

Hierbei hat die symmetrische Abnahme der Größe der Fase beidseitig des Ringstoßes in Kombination mit dem Merkmal, dass die Fase auf der Unterseite des Kolbenrings angeordnet ist, den Vorteil, dass der unter mechanischer Spannung stehende Kolbenring über seinen gesamten Umfang eine gleich bleibende negative Vertwistung erfährt, wobei die Unterseite des Kolbenrings in Anlage an die äußere Kante der unteren Nutflanke gelangt, wodurch sich über den gesamten Umfang der Zylinderinnenwand eine gleich bleibend gute Ölabstreifwirkung des Kolbenrings ergibt.

Zweckmäßige Ausgestaltungen der Erfindung sind Gegenstand der Unteransprüche.

Einige Ausführungsbeispiele der Erfindung werden im Folgendem anhand der Zeichnungen beschrieben. Es zeigen
- Fig. 1: die Unteransicht einer ersten Ausgestaltung eines Kolbenringes mit einer unten, innen liegenden Fase, deren Größe ausgehend vom Ringstoß bis hin zu der dem Ringstoß gegenüberliegenden Seite des Kolbenrings stetig abnimmt,
- Fig. 2: einen Schnitt durch den Kolbenring entlang der Linie II-II in Fig. 1,
- Fig. 3: die Unteransicht einer zweiten Ausgestaltung eines Kolbenrings mit einer unten, innen liegenden Fase, die mehrere Bereiche teils konstanter teils im Verlauf der Fase variierender Größe aufweist,
- Fig. 4: einen Schnitt durch den Kolbenring gemäß Fig. 3 entlang der Linie IV-IV in Fig. 3 und
- Fig. 5: einen Schnitt durch den in eine Kolbenringnut eingelegten, unter mechanische Spannung stehenden Kolbenring.

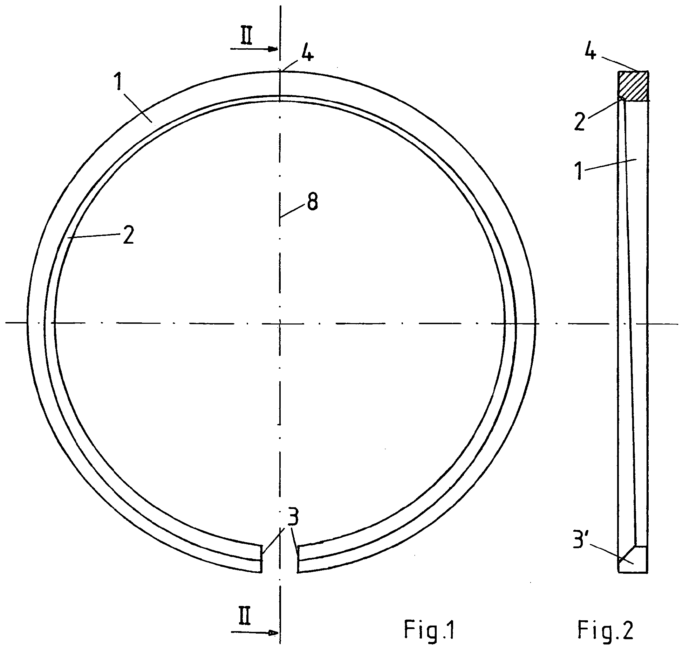

Fig. 1 zeigt die Unteransicht eines Kolbenringes 1,
der bei einem Kolben mit 3 Kolbenringen als zwischen dem Kompressionsring und dem Ölabstreifring angeordneter, zweiter Kolbenring Verwendung findet. Fig. 2 zeigt einen Schnitt durch den Kolbenring 1 entlang der Linie II-II in Fig. 1, wobei wegen der Lage der Schnittebene der untere Teil des Schnittbildes eines der Stoßenden 3' des Kolbenrings 1 erkennen lässt. Den Figuren 1 und 2 ist zu entnehmen, dass der Kolbenring 1 eine auf seiner Unterseite und innen angeordnete Fase 2 aufweist, die als eine nach oben konisch zulaufende Querschnittsstörung ausgebildet ist.

Im Bereich des Ringstoßes 3 weist die Fase 2 ihre maximal Größe auf, während die Fase 2 auf der dem Ringstoß 3 gegenüberliegenden Seite 4 des Kolbenrings 1 ihre minimale Größe hat. Gemäß dem in den Figuren 1 und 2 dargestellten Ausführungsbeispiel des Kolbenrings 1 nimmt die Größe der Fase 2 ausgehend vom Ringstoß 3 bis zu der hierzu gegenüberliegenden Seite 4 des Kolbenrings 1 stetig ab.

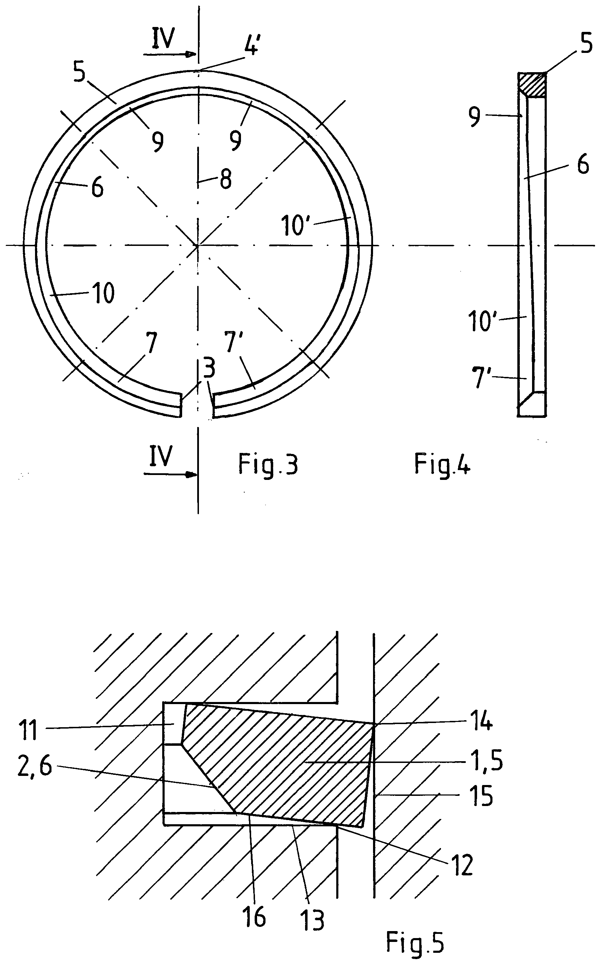

Gemäß einem in den Fig. 3 und 4 dargestellten Ausführungsbeispiel des Kolbenrings 5 weist die Fase 6 beidseitig des Ringstoßes 3 je einen Stoßbereich 7, 7' auf, in dem die Fase 6 eine konstante Größe hat. Auf der dem Ringstoß 3 gegenüberliegenden Seite 4' des Kolbenrings 5 weist die Fase 6 beidseitig der radialen Achse 8 einen Mittenbereich 9 mit konstanter Größe auf. In den Stoßbereichen 7 und 7' ist die Fase 6 größer ausgebildet, als im Mittenbereich 9. Beidseitig der radialen Achse 8 sind die Stoßbereiche 7 und 7' der Fase 6 über je einen Verbindungsbereich 10 und 10' mit dem Mittenbereich 9 verbunden. Die Größe der Verbindungsbereiche 10, 10' nimmt von den Kontaktstellen zu den Stoßbereichen 7, 7', wo die Verbindungsbereiche 10, 10' die gleich Größe wie die Stoßbereiche 7, 7' aufweisen, bis zu den Kontaktstellen zu dem Mittenbereich 9 stetig ab, wo die Verbindungsbereiche 10, 10' die gleiche Größe haben wie der Mittenbereich 9.

Wie Fig. 5, ein Schnitt durch den in eine Kolbenringnut 11 eingelegten Kolbenring 1, 5, zeigt, bewirkt beim Einsetzen des mit dem Kolbenring ausgestatteten Kolbens in den Motorzylinder die hierbei auf den Kolbenring ausgeübte, mechanische Spannung eine Verdrehung des Kolbenrings 1, 5. Da die Fase 2, 6 des Kolbenrings 1, 5 unten, innen angeordnet ist, ergibt sich bei dem in Fig. 5 dargestellten Schnitt durch die rechte Hälfte des Kolbenrings 1, 5 eine Drehung im Uhrzeigersinn und bei der nicht dargestellten linken Hälfte des Kolbenrings 1, 5 eine Drehung gegen den Uhrzeigersinn. Diese Art der Verdrehung eines Kolbenrings wird negative Vertwistung genannt und hat den Vorteil, dass die äußere Kante 12 der unteren Flanke 13 der Kolbenringnut 11 in Kontakt zu der unteren Seite 16 des Kolbenrings 1, 5 gelangt. Hierdurch wird die Kolbenringnut 11 im Bereich der Kante 12 gegenüber dem von der äußeren, oberen Kante 14 des Kolbenrings 1, 5 von der Zylinderinnenwand 15 abgestreiften Öl abgedichtet, was eine gute Ölabstreifwirkung des Kolbenrings 1, 5 ergibt.

Hierbei hat sich herausgestellt, dass eine Fase, die vom Ringstoß 3 ausgehend bis zu der dem Ringsstoß 3 gegenüberliegenden Seite 4 des Kolbenrings 1 stetig abnimmt, bewirkt, dass der Grad der Vertwistung des Kolbenrings 1, 5 im Bereich des Ringsstoßes 3 ungefähr so groß ist, wie auf der dem Ringstoß 3 gegenüberliegenden Seite 4, 4' des Kolbenringes 1, 5.

Hierdurch ergibt sich der Vorteil der vorliegenden Erfindung, dass die unten, innen angeordnete und vom Ringstoß 3 bis zu der dem Ringstoß 3 gegenüberliegenden Seite 4, 4' des Kolbenringes 1, 5 größenmäßig abnehmende Fase 2, 6 über den gesamten Umfang des Kolbenringes 1, 5 eine annähernd gleich bleibende, negative Vertwistung und damit über den gesamten Umfang der Zylinderinnenwand 15 eine gute Ölabstreifwirkung bewirkt.

Außerdem wird dadurch erreicht, dass sich der unter mechanischer Spannung stehende Kolbenring im Bereich seiner Stoßenden nicht aufrichtet, dass dadurch die Oberkanten des Stoßenden nicht in Kontakt zur oberen Flanke der Ringnut kommen, und dass damit der Kolbenring im Bereich seiner Stoßenden nicht übermäßig verschleißt.

Die Ausgestaltung der Fase 6 gemäß Fig. 3 und 4 hat darüber hinaus den Vorteil, dass über die Wahl der Größe der Bereiche 7, 9, 10, in denen die Fase über den Ringumfang betrachtet teils eine konstante Größe (Bereiche 7, 7' und 9) und teils eine stetig abnehmende Größe (Bereiche 10, 10') aufweist, die Vertwistung des mechanisch gespannten Ringes gezielt beeinflussbar ist, sodass unabhängig von der Größe des Kolbens und damit des Kolbenringes und unabhängig von der kinetischen Belastung des Kolbens die Vertwistung des Ringes im Bereich des Stoßes 3 ebenso groß ist, wie auf der dem Stoß 3 gegenüberliegenden Seite 4, 4' des Ringes. Ein Spalt zwischen der Ringunterseite und der unteren Flanke der Kolbenringnut und dadurch eine Verschlechterung der Ölabstreifwirkung im Stoßbereich des Ringes wird hierdurch weitestgehend vermieden.

### Bezugszeichenliste

- 1: Kolbenring
- 2: Fase
- 3: Ringstoß
- 3': Stoßende
- 4, 4': dem Ringstoß 3 gegenüberliegende Seite des Kolbenrings
- 5: Kolbenring
- 6: Fase
- 7, 7': Stoßbereich der Fase 6
- 8: radiale Achse
- 9: Mittenbereich der Fase 6
- 10, 10': Verbindungsbereich
- 11: Kolbenringnut
- 12: äußere Kante der unteren Flanke der Kolbenringnut 11
- 13: untere Flanke der Kolbenringnut 11
- 14: äußere, obere Kante des Kolbenrings
- 15: Zylinderinnenwand
- 16: untere Seite des Kolbenrings

## Patentansprüche

1. Kolbenring (1, 5) für einen einen Kolbenboden aufweisenden Kolben eines Verbrennungsmotors
- mit einem Ringstoß (3) und
- mit einer umlaufenden, radial innen liegenden Fase (2, 6),
- deren Größe beidseitig des Ringstoßes (3) bis zu der dem Ringstoß (3) gegenüberliegenden Seite (4, 4') des Kolbenrings (1) symmetrisch zu einer durch den Ringstoß (3) laufenden, radial liegenden Achse (8) abnimmt,
- wobei die Fase (2, 6) auf der dem Kolbenboden abgewandten, unteren Seite des Kolbenrings (1) angeordnet ist,
- wobei die Fase (6) beidseitig des Ringstoßes (3) je einen Stoßbereich (7, 7') und auf der dem Ringstoß (3) gegenüberliegenden Seite (4') des Kolbenrings (5) einen Mittenbereich (9) aufweiset,
- wobei die Stoßbereiche (7, 7') über je einen Verbindungsbereich (10, 10') mit dem Mittenbereich (9) verbunden sind
- wobei die Fase (6) in den Verbindungsbereichen (10, 10') an den Kontaktstellen zu den Stoßbereichen (7, 7') die Größe der Fase (6) der Stoßbereiche (7, 7') und an den Kontaktstellen zu dem Mittenbereich (9) die Größe der Fase des Mittenbereichs (9) aufweiset,
**dadurch gekennzeichnet,**
- **dass** die Größe der Fase (6) in den Stoßbereichen (7, 7') und im Mittenbereich (9) konstant und in den Stoßbereichen (7, 7') größer als im Mittenbereich (9) ist und
- **dass** die Größe der Fase in den Verbindungsbereichen (10, 10') ausgehend von den Kontaktstellen zu den Stoßbereichen (7, 7') hin zu den Kontaktstellen mit dem Mittenbereich (9) stetig abnimmt.

## Claims

1. Piston ring (1,5) for a piston of an internal combustion engine having a piston head
- with a ring joint (3) and
- with a circumferential, radially inward-lying chamfer (2,6)
- the size of which decreases from both sides of the ring joint (3) to the side (4,4') of the piston ring (1) lying opposite the ring joint (3), symmetrically about a radial-lying axis (8) running through the ring joint (3),
- whereby the chamfer (2,6) is arranged on the lower side of the piston ring (1) facing away from the piston head,
- whereby the chamfer (6) has, on both sides of the ring joint (3), a respective joint region (7,7') and, on the side (4') of the piston ring (5) lying opposite the ring joint (3), a centre region (9),
- whereby the joint regions (7,7') are each connected with the centre region (9) by a connection region (10,10').
- whereby the chamfer (6) in the connection regions (10,10') has the size of the chamfer (6) of the joint regions (7,7') at the contact locations with the joint regions (7,7') and has the size of the chamfer of the centre region (9) at the contact locations with the centre region (9),
**characterized in that**
- the size of the chamfer (6) is constant in the joint regions (7,7') and in the centre region (9) and is greater in the joint regions (7,7') than in the centre region (9), and
- the size of the chamfer in the connection regions (10,10') constantly decreases from the contact locations with the joint regions (7,7') to the contact locations with the centre region (9).

## Revendications

1. Segment de piston (1, 5) pour un piston, présentant un fond de piston, d'un moteur à combustion interne
- avec une découpure (3), et
- avec un biseau (2, 6) périphérique situé radialement à l'intérieur,
- dont la dimension diminue de part et d'autre de la découpure (3) jusqu'au côté (4, 4') faisant face à la découpure (3), du segment de piston (1) de manière symétrique par rapport à un axe (8) situé de manière radiale, traversant la découpure (3),
- dans lequel le biseau (2, 6) est disposé sur le côté inférieur, opposé au fond de piston, du segment de piston (1),
- dans lequel le biseau (6) présente, de part et d'autre de la découpure (3), respectivement une zone de découpure (7, 7') et, sur le côté (4') faisant face à la découpure (3) du segment de piston (5), une zone centrale (9),
- dans lequel les zones de découpure (7, 7') sont reliées par l'intermédiaire respectivement d'une zone de liaison (10, 10') à la zone centrale (9),
- dans lequel le biseau (6) présente, dans les zones de liaison (10, 10'), au niveau des emplacements de contact avec les zones de découpure (7, 7'), la dimension du biseau (6) des zones de découpure (7, 7') et, au niveau des emplacements de contact avec la zone centrale (9), la dimension du biseau de la zone centrale (9),
**caractérisé en ce**
- **que** la dimension du biseau (6) est constante dans les zones de découpure (7, 7') et dans la zone centrale (9) et est plus grande dans les zones de découpure (7, 7') que dans la zone centrale (9), et
- **que** la dimension du biseau diminue sans cesse dans les zones de liaison (10, 10') en partant des emplacements de contact avec les zones de découpure (7, 7') en direction des emplacements de contact avec la zone centrale (9).
